(19) **Europäisches Patentamt**

**European Patent Office**

**Office européen des brevets**

(11) **EP 0 819 555 B1**

(12) **EUROPEAN PATENT SPECIFICATION**

(45) Date of publication and mention
of the grant of the patent:
**04.06.2003 Bulletin 2003/23**

(51) Int Cl.$^7$: **B60C 19/08**

(21) Application number: **97305410.9**

(22) Date of filing: **18.07.1997**

(54) **Pneumatic tires**

Luftreifen

Bandages pneumatiques

(84) Designated Contracting States:
**DE ES FR GB IT NL SE**

(30) Priority: **18.07.1996 JP 20787796**

(43) Date of publication of application:
**21.01.1998 Bulletin 1998/04**

(73) Proprietor: **Bridgestone Corporation
Tokyo (JP)**

(72) Inventor: **Komatsu, Hideki
Kodaira City, Tokyo (JP)**

(74) Representative: **Whalley, Kevin et al
MARKS & CLERK,
57-60 Lincoln's Inn Fields
London WC2A 3LS (GB)**

(56) References cited:
**EP-A- 0 658 452        EP-A- 0 718 126
EP-A- 0 718 127        EP-A- 0 747 243
EP-A- 0 754 574        DE-A- 4 002 628
US-A- 5 518 055**

## Description

This invention relates to a pneumatic tire having an electrically conducting path formed by using an electrically conductive rubber composition, and more particularly to a pneumatic tire having a low conductive tread compounded with a great amount of a filler such as silica for the improvement of low fuel consumption in which an electrically conducting path is formed in the tread by using an electrically conductive rubber composition for the prevention of electricity.

The pneumatic tire provided with a tread having a lower fuel consumption, particularly a silica-containing tread is high in the electric resistance and low in the electric conductivity, so that static electricity generated from a vehicle body or a tire is hardly dissipated to ground surface through the tread and hence there are caused problems such as noise to radio, electric shock, spark and the like.

There are known the following methods for solving the above problems.

As a first method, an electrically conductive rubber thick sheet is extended in a central portion of a tread in a widthwise direction thereof from an outer surface of the tread to a base rubber of the tread, or an electrically conductive rubber thin sheet is extended from a shoulder portion of the tread to an inside of a sidewall (see USP 5,518,055 and JP-A-8-34204)

Attention is also drawn to the disclosure of EP-A-0 658 452 defining a pneumatic tire according to this first method, having a tread, wherein a rubber layer having a specific resistance equal to or less than 108 $\Omega$.cm and a thickness of 2 mm to 40 mm, and made from a rubber composition comprising carbon black, forms a continuous layer arranged within a ground contact region of the tread and extending in the circumferential direction of the tire and passing through the tread while contacting with a surface portion of the tread having a specific resistance of not less than $10^{11}$ $\Omega$.cm and also contacting a part of at least one tire member other than the tread adjacent to the tread in radial direction.

As a second method, carbon black different from that usually used in the tire and having an excellent electric conductivity is compounded with a tread rubber.

As a third method, there is a method of applying onto a surface of a tread an electrically conductive substance such as a water-based electrically conducting rubber cement containing an electrically conductive carbon black or the like during the extrusion of the tread in the production of the tire (e.g. see JP-A-8-120120). According to this method, even if a product tire after vulcanization is mounted onto a passenger car and run over a long time to wear a ground contact region of the tread, the electrically conducting substance still remains in side walls of many grooves forming a tread pattern of the ground contact region, which can dissipate static electricity charged in the whole of the tire to ground surface.

However, all of these methods have problems in the production and quality as mentioned below and are not necessarily satisfied.

For example, the antistatic effect is maintained at an initial running stage in the rubber sheet or contact rubber layer as disclosed in EP 0 658 452B1, but there is a problem that if general-purpose carbon black is used as a filler, the electrically conducting path is interrupted at the running end stage due to the promotion of the wearing of the electrically conductive layer to disappear the antistatic effect. Particularly, in order to maintain the effect of improving the wear resistance of the tread rubber or a tread cap rubber made from the silica-containing rubber composition, the wear resistance of the electrically conductive rubber sheet or contact rubber layer should be improved likewise the tread cap rubber, but only the tread cap rubber is actually contacted with ground and hence the antistatic effect can not be obtained.

Further, when several parts by weight of the electrically conductive carbon black based on 100 parts by weight of rubber ingredient is added to the tread rubber for the tire, the electric resistance of the tread rubber is lowered, but the low fuel consumption as a primary object of the tire is considerably degraded, while the carbon black itself is considerably low in the reinforcing effect for the polymer and hence there is caused a problem of lowering the wear resistance of the tire tread.

In the method of applying the water-based rubber cement containing the electrically conductive carbon black onto the surface of the tread cap rubber, there is a problem in the stationary stability of the cement itself and hence there is a fear of causing phase separation. Furthermore, it is required to use various stabilizers in order to prevent the blowing in the application, which degrades the durability of the resulting rubber cement film after the vulcanization and also results in the contamination of the mold for vulcanization. Moreover, the rubber composition used in the tread cap rubber is hydrophobic, so that when the above water-based rubber cement is applied onto the tread cap rubber, the drying takes a long time and the application unevenness is caused and hence the durability of the applied film is degraded. And also, the adhesion force at the boundary between the tread cap rubber and the film of the water-based rubber cement lowers and hence the boundary peeling is caused during the running of the tire, so that there is caused a problem that the antistatic effect is not obtained at the end stage of the running due to the breakage of electrically conducting path.

It is, therefore, an object of the invention to provide a low fuel consumption pneumatic tire comprising an electrically low conductive tread compounded with a great amount of a filler such as silica and having considerably improved antistatic effect and stationary stability.

The inventors have made various studies in order to solve the aforementioned problems and found that the above object is achieved by applying a rubber layer having a particular specific resistance to a given place of a low fuel consumption pneumatic tire comprising an electrically low conductive tread to form an electrically conducting path and as a result the invention has been accomplished.

According to the invention, there is the provision of a pneumatic tire according to claim 1.

Still more preferred embodiments of the invention are defined in claims 2 to 5.

The invention will be described with reference to the accompanying drawings, wherein:

Figs. 1a to 1c are diagrammatically section views of various embodiments of the tread portion in the pneumatic tire according to the invention, respectively;

Fig. 2 is a diagrammatically section view of an illustrative example of a pneumatic tire, which does not form part of the invention;

Fig. 3 is a diagrammatically partial section view illustrating a position of applying an electrically conducting rubber composition;

Fig. 4 is a schematic view of an apparatus for measuring an electric resistance of a tire used in examples; and

Fig. 5 is a schematic view illustrating a measurement of an electric resistance R in a sample rubber.

In the invention, it is preferable that at least one of styrene-butadiene rubber (SBR), butadiene rubber (BR) and natural rubber (NR) is used as the diene rubber in the rubber composition for the formation of the rubber layer having a specific resistance of not more than $10^6$ $\Omega$·cm from a viewpoint of the durability.

Further, carbon black having a nitrogen adsorption specific surface area ($N_2SA$) of not less than 130 $m^2$/g and a dibutyl phthalate adsorption (DBP) of not less than 110 ml/100 g is included in the rubber composition for the formation of the rubber layer according to the invention. That is, the use of such a high structure carbon black improves the durability of the rubber layer forming an electrically conducting path and can develop the antistatic effect up to the running end stage of the tire. Moreover, the value of $N_2SA$ is measured according to ASTM D3037-89 and the value of DBP is measured according to ASTM D2414-90.

When the amount of the carbon black compounded is less than 40 parts by weight based on 100 parts by weight of the diene rubber, the reinforcing action is insufficient, while when it exceeds 100 parts by weight, if the amount of the softening agent is small, the cured product becomes too hard and the cracking or the like is caused, and if the amount of the softening agent is large, the wear resistance lowers. Moreover, the rubber composition according to the invention may properly be compounded with additives usually used in rubber articles such as vulcanizing agent, vulcanization accelerator, accelerator activator, softening agent, antioxidant and the like in addition to the carbon black.

The structure of the pneumatic tire according to the invention will concretely be described below.

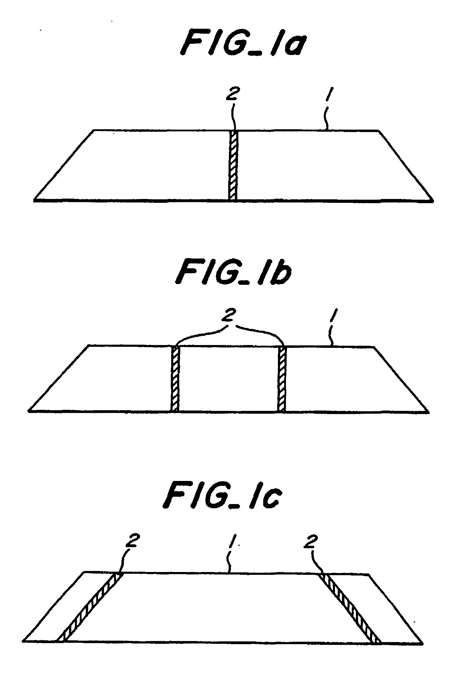

In the pneumatic tire according to the invention, the rubber layer forms a continuous layer extending in the circumferential direction of the tire while contacting with an outer surface of a tread rubber having a specific resistance of not less than $10^8$ $\Omega$·cm and a part of at least one member adjacent to the tread. The word "a part" used herein means a part of a member viewed in a widthwise direction of the tire as shown in Figs. 1-3, and forms a continuous layer viewing in the circumferential direction.

In a preferable embodiment of the pneumatic tire according to the invention, at least one continuous layer viewing in the widthwise direction of the tread is extended continuously in the circumferential direction between an outer surface of a tread rubber and an underlayer rubber. In this case, a good antistatic effect can be developed even if a continuous layer 2 is existent in a central portion of a tread 1 in the widthwise direction as diagrammatically shown in Fig. 1a or the continuos layer 2 is existent in each side with respect to the center of the tread in the widthwise direction as diagrammatically shown in Fig. 1b or 1c. Moreover, the term "underlayer rubber" used herein means a tread base rubber when the tread has a cap/base structure, or a rubber layer beneath the tread when the tread is made from a single tread rubber.

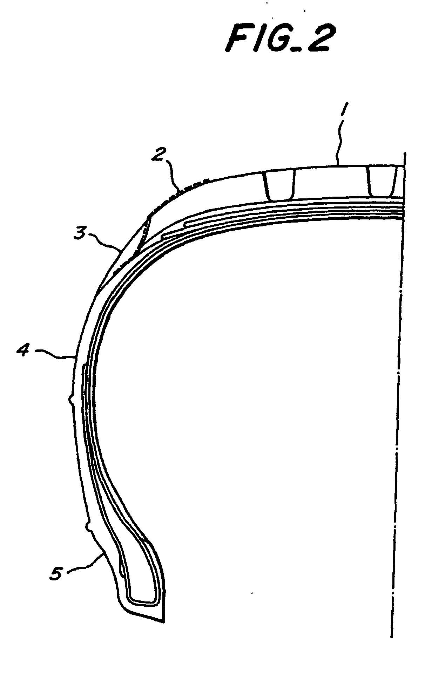

In an illustrative example of a pneumatic tire, the continuous layer 2 is extended continuously in the circumferential direction of the tire between the tread rubber 1 and a wing (mini-side) rubber 3 and between the wing 3 and a sidewall rubber 4 as shown in Fig. 2.

In general, silica-containing rubber is used in the tread for simultaneously establishing low rolling resistance and high wet running performances. On the other hand, the rubber layer as the continuous layer is made from an electrically conductive rubber containing a greater amount of carbon black and is considerably high in hysteresis loss as compared with the silica-containing rubber. As a result, as the thickness of the rubber layer becomes thicker, the rolling resistance of the tire is degraded. Furthermore, the high carbon black-containing rubber layer is poor in the wear resistance as compared with the silica-containing rubber, so that the wearing of the continuous layer made from a thick rubber layer is promoted as compared with the silica-containing rubber during the running of the tire and finally a portion of the continuous layer not contacting with ground is created at the running end stage to increase the electric resistance of the tire.

The thickness of the rubber layer as a continuous layer after the curing is 100 µm - 1 mm, preferably 200-800 µm considering the durability up to the running end stage. When the thickness exceeds 1 mm, the rolling resistance of the tire is degraded and the occurrence of uneven wear is promoted as mentioned above and also the peeling phenomenon is apt to be caused due to the difference of modulus of elasticity to the tread rubber and it is difficult to stably maintain the low value of electric resistance in the tire up to the running end stage. Further, in order to prevent the occurrence of uneven wear due to the difference in the properties between the tread rubber and the continuous rubber layer, it is required to provide a continuous thick rubber layer in accordance with the various compositions of the tread rubber used in commercially available tires, so that the productivity of the tire undesirably lowers. While, when it is less than 100 µm, it is possible to obstruct the formation of the continuous rubber layer due to the difficulty of extrusion operation of thinner rubber sheet and the rubber flowing in the vulcanization.

An example of electric resistance in a pneumatic tire between ground surface and a rim will concretely be described with reference to Fig. 2.

In the pneumatic tire shown in Fig. 2, a rubber layer 2 as a continuous layer is sandwiched between a tread rubber, particularly tread cap rubber 1 and a wing (mini-side) rubber 3. Even if a specific resistance of the tread cap rubber is as high as $10^{11}$ µ·cm, when a specific resistance of the rubber layer 2 is $10^5$ Ω·cm, a specific resistance of the wing 3 is $10^6$ Ω·cm, a specific resistance of a sidewall portion 4 is $10^6$ Ω·cm and a specific resistance of a bead portion 5 contacting with a rim flange (not shown) is $10^5$ Ω·cm, an electrically conducting path of ground surface →tread cap rubber 1 →wing 3 →sidewall portion 4 →bead portion 5 →rim→vehicle body is formed through the continuous rubber layer 2, whereby the electric resistance of the tire can be maintained at a low value irrespectively of the specific resistance of the tread cap rubber. In case of the pneumatic tire having no wing, the similar effect can be obtained by arranging the continuous rubber layer between the tread cap rubber and the sidewall rubber to form an electrically conducting path from the tread cap rubber to the sidewall portion. In any case, it is favorable that the value of electric resistance of the tire between ground surface and rim based on the above path is not more than $10^7 Ω$ from a viewpoint of the antistatic effect.

The following examples are given in illustration of the invention and are not intended as limitations thereof.

Various tread cap rubbers and electrically conductive rubber compositions A, B used in the pneumatic tire are prepared according to a compounding recipe as shown in Tables 1-2.

Table 1

| Tread cap Rubber (unit: parts by weight) | |
| --- | --- |
| Styrene-butadiene rubber *1 | 96 |
| Butadiene rubber *2 | 30 |
| $SiO_2$ *3 | 60 |
| Carbon black (N234) *4 | 20 |
| Silane coupling agent *5 | 6 |
| ZnO | 3 |
| Stearic acid | 2 |
| Aromatic oil | 10 |
| Vulcanization accelerator (CBS) *6 | 1.5 |
| Vulcanization accelerator (DPG) *7 | 2 |
| Sulfur | 1.5 |

Note)
*1: SBR1712, trade name, made by Japan Synthetic Rubber Co., Ltd.

*2: 96% cis-bond

*3: Nipsil VN3

*4: $N_2SA$: 126 $m^2$/g, DBP: 125 ml/100g

*5: Si69 made by Degussa

*6: N-cyclohexyl-2-benzothiazyl sulfenamide

*7: diphenyl guanidine

Table 2

| (unit: parts by weight) | | |
|---|---|---|
| | Rubber composition (A) | Rubber composition (B) |
| Natural rubber | 40 | 40 |
| Styrene-butadiene rubber *8 | 60 | 60 |
| Carbon black (N134) *9 | 60 | - |
| Carbon black (N330) *10 | - | 65 |
| Aromatic oil | 15 | 15 |
| ZnO | 2 | 2 |
| Antioxidant *11 | 1 | 1 |
| Vulcanization accelerator (DPG) | 0.2 | 0.2 |
| Vulcanization accelerator (NS) *12 | 0.8 | 0.8 |
| Sulfur | 1.5 | 1.5 |

Note) *8: SBR1500, trade name, made by Japan Synthetic Rubber Co., Ltd.

*9: $N_2SA$: 146 $m^2$ /g, DBP: 127 ml/100g

*10: $N_2SA$: 83 $m^2$ /g, DBP: 102 ml/100g

*11: N-(1,3-dimethylbutyl)-N'-phenyl-p-phenylene diamine

*12: N-tert-butyl-2-benzothiazolyl sulfenamide

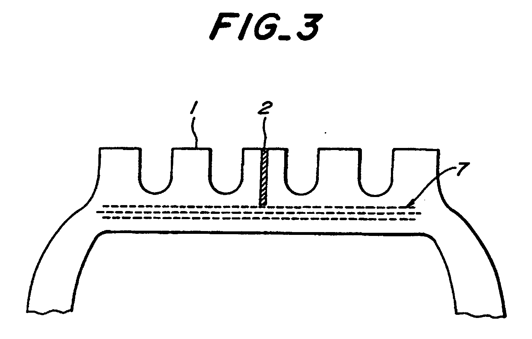

A pneumatic tire having a tire size of 185/70R14 is manufactured by continuously arranging a rubber layer 2 made from each of the rubber composition A, B in a central portion of a tread 1 in the circumferential direction of the tire so as to arrive at a belt 7 located beneath the tread as shown in Fig. 3. In new tires after vulcanization, the rubber layer 2 has a thickness as shown in Table 3. Moreover, the tread rubber has tan δ at 60°C of 0.18, and the rubber layer made from the rubber composition A has tan δ at 60°C of 0.29.

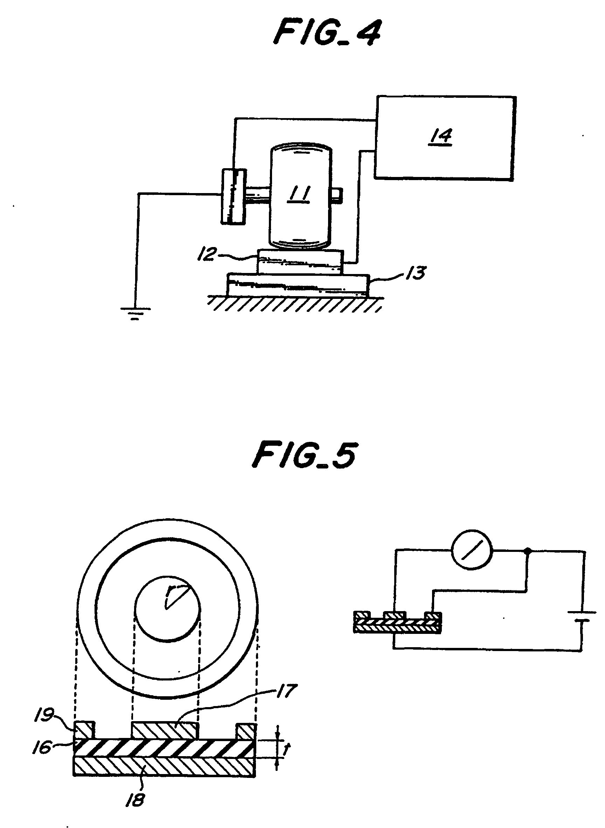

Further, an electric resistance of each of these tires is measured according to WdK 110 Sheet 3 of German Association of Rubber Industry by placing an assembly 11 of a test tire and a rim on a steel plate 12 placed on an insulation plate 13 and then flowing electric current of 1000 V between the rim and the steel plate to read electric resistance by means of a high resistance meter of Model HP4339A made by Hewlett Packard as shown in Fig. 4.

Moreover, the specific resistance of the rubber layer 2 as the continuous layer is measured as follows.

That is, a cured sample sheet having a radius (r) of 25 mm and a thickness (t) of 2 mm is made from each of the rubber compositions A and B and then placed in a test box for the measurement of insulation resistance made by Advance Corporation as shown in Fig. 5 to measure a sheet resistance (R). Next, the specific resistance ρ (Ω·cm) of the rubber layer 2 is calculated according to the following equation using the measured values:

$$\rho = (\pi x\, r^2/t) \times R$$

In Fig. 5, numeral 16 is a sample sheet, numeral 17 a main electrode, numeral 18 an opposite electrode, and numeral 19 a guard electrode.

The electric resistances in new tire, after the running over 10000 km and after the running over 40000 km and the rolling resistance of new tire are measured to obtain results as shown in Table 3.

Table 3

| | Comparative Example 1 | Example 1 | Example 2 | Comparative Example 2 |
|---|---|---|---|---|
| Rubber composition | - | A | B | A |
| Specific resistance (Ω·cm) resistance | - | $10^6$ | $10^6$ | $10^6$ |
| Thickness of continuous rubber layer in new tire (μm) | 0 | 200 | 200 | 6000 |

Table 3   (continued)

| | | Comparative Example 1 | Example 1 | Example 2 | Comparative Example 2 |
|---|---|---|---|---|---|
| Rolling resistance of new tire (index) *1 | | 100 | 100 | 100 | 95 |
| Electric resistance ($\Omega$) | new tire | $10^{10}$ | $10^6$ | $10^6$ | $10^6$ |
| | after the running over running Km *2 | $10^{11}$ | $10^6$ | $10^6 \sim 10^7$ | $10^6 \sim 10^7$ |
| | after the running over 40,000 Km *2 | $10^{11}$ | $10^6$ | $10^7 \sim 10^8$ | $10^7 \sim 10^{10}$ |

*1: A test tire subjected to an internal pressure of 1.70 kgf/cm$^2$ is placed on a drum having an outer diameter of 1708 mm and trained at a speed of 80 km/h under JIS 100% load for 30 minutes. After the internal pressure is readjusted, the rotating speed of the drum is raised to 200 km/h and then the rotation of the drum is stopped to inertially move the drum from 185 km/h to 20 km/h, during which inertia moment is measured and substituted for the following equation to calculate the rolling resistance (RR) of the tire. The rolling resistance is represented by an index value on the basis that Comparative Example 1 is 100. The larger the index value, the lower the rolling resistance.

$$RR = ds/dt(at/RD^2 + It/Rt^2) \text{ - resistance of drum itself}$$

wherein ID: inertia moment of drum
   It: inertia moment of tire
   RD: radius of drum
   Rt: radius of tire

*2: In Example 2 and Comparative Example 2, the scattering on the value of the electric resistance after the running over 10000 km or 40000 km is considerably large in accordance with a measuring point on the circumference of the tire, so that a range of electric resistance measured on four points is shown in Table 3.

As seen from Table 3, when the thickness of the continuous rubber layer becomes thicker as in Comparative Example 2, the rolling resistance of the tire is degraded.

On the contrary, the effect of reducing the electric resistance of the tire is observed without the degradation of the rolling resistance in Examples 1 and 2.

In Example 1, the electric resistance of $10^6$ $\Omega$ is particularly held even after the running over 40000 km irrespectively of the presence or absence of the wing. This shows that the electrically conducting path is well maintained by the rubber layer according to the invention even at the running end stage.

In Example 2, the low electric resistance is maintained with a slight scattering after the running over 10000 km irrespectively of the presence or absence of the wing, but the scattering width of the electric resistance becomes large on the circumference of the tire after the running over 40000 km and rises to 1010 $\Omega$ at a certain position. This shows that the electrically conducting path is existent over a full circumference of the tire at the initial running stage but is interrupted in a certain ground contact region at the running end stage to lose the antistatic effect by the application of the electrically conductive rubber composition. That is, the tire of Example 2 shows that it is not always easy to maintain a constant and low electric resistance up to the running end stage.

As mentioned above, the pneumatic tire according to the invention develops the excellent antistatic effect up to the running end stage and has a high stationary stability by applying the rubber layer made from the electrically conductive rubber composition to a given place of a low fuel consumption pneumatic tire comprising a tread made from a silica-containing tread rubber having a low electrical conductivity. Therefore, the pneumatic tire according to the invention develops excellent effects as an antistatic tire.

## Claims

1. A pneumatic tire having a tread (1), wherein a rubber layer having a specific resistance of not more than $10^6$ $\Omega \cdot$cm and a thickness of 100$\mu$m - 1mm, and made from a rubber composition comprising 40-100 parts by weight of carbon black having a nitrogen adsorption specific surface area ($N_2$SA) of not less than 130m$^2$/g and a dibutyl phthalate absorption (DBP) of not less than 110m1/100g based on 100 parts by weight of a diene rubber, forms a continuous layer (2) arranged within a ground contact region of the tread and extending in a circumferential direction of the tire and passing through the tread while contacting with a surface portion of the tread having a specific resistance of not less than $10^8$ $\Omega \cdot$cm and also contacting a part of at least one tire member other than said tread adjacent to said tread in a radial direction.

2. A pneumatic tire as claimed in claim 1, **characterized in that** the continuous layer (2) is existent in at least one place in a widthwise direction of the tread while contacting with the surface portion of the tread (1) and a tread base portion adjacent thereto.

3. A pneumatic tire as claimed in claim 2, **characterized in that** the continuous layer (2) is existent in a central zone of the tread (1) .

4. A pneumatic tire as claimed in claim 2, **characterized in that** the continuous layer (2) is existent in each side with respect to the center of the tread (1).

5. A pneumatic tire as claimed in any of claims 1 to 4, **characterized in that** an electric resistance of the tire between a rim and ground is not more than $10^7$ $\Omega$.

**Patentansprüche**

1. Luftreifen, der eine Lauffläche (1) hat, bei der eine Gummischicht, die einen spezifischen Widerstand von nicht mehr als $10^6$ $\Omega \cdot$cm und eine Dicke von 100 $\mu$m - 1 mm hat und aus einer Gummizusammensetzung besteht, die bezogen auf 100 Gewichtsteile eines Diengummis 40-100 Gewichtsteile Ruß aufweist, der eine spezifische Stick-stoffadsorptionsoberfläche ($N_2SA$) von nicht weniger als 130 $m^2$/g und eine Dibutylphthalatabsorption (DBP) von nicht weniger als 110 ml/100 g hat, eine kontinuierliche Schicht (2) bildet, die in dem Bodenkontaktgebiet der Lauffläche angeordnet ist und sich in der Umfangsrichtung des Reifens erstreckt, und durch die Lauffläche hindurchgeht, während sie einen Oberflächenbereich der Lauffläche berührt, der einen spezifischen Widerstand von nicht weniger als $10^8$ $\Omega \cdot$cm hat, und auch einen Teil von mindestens einem Reifenelement berührt, das verschieden von der Lauffläche ist und in der radialen Richtung an die Lauffläche angrenzt

2. Luftreifen wie in Anspruch 1 beansprucht, **dadurch gekennzeichnet, daß** die kontinuierliche Schicht (2) an mindestens einer Stelle in der Breitenrichtung der Lauffläche vorhanden ist, während sie den Oberflächenbereich der Lauffläche (1) und einen daran angrenzenden Laufflächen-Basisbereich berührt.

3. Luftreifen wie in Anspruch 2 beansprucht, **dadurch gekennzeichnet, daß** die kontinuierliche Schicht (2) in einer mittleren Zone der Lauffläche (1) vorhanden ist.

4. Luftreifen wie in Anspruch 2 beansprucht, **dadurch gekennzeichnet, daß** die kontinuierliche Schicht (2) in jeder Seite bezüglich der Mitte der Lauffläche (1) vorhanden ist.

5. Luftreifen wie in irgendeinem der Ansprüche 1 bis 4 beansprucht, **dadurch gekennzeichnet, daß** der elektrische Widerstand des Reifens zwischen einer Felge und dem Boden nicht größer als $10^7$ $\Omega$ ist.

**Revendications**

1. Bandage pneumatique comportant une bande de roulement (1), dans laquelle une couche de caoutchouc ayant une résistance spécifique non supérieure à $10^6$ $\Omega \cdot$cm et une épaisseur comprise entre 100 $\mu$m et 1 mm, et composée d'une composition de caoutchouc comprenant 40 à 100 parties en poids de noir de carbone ayant une aire de surface spécifique d'adsorption d'azote ($N_2SA$) non inférieure à 130 $m^2$/g et un indice d'absorption du phtalate de dibutyle (DBP) non inférieure à 110 ml/100 g sur la base de 100 parties en poids d'un caoutchouc diénique, forme une couche continue (2) agencée dans une région de contact au sol de la bande de roulement et s'étendant dans une direction circonférentielle du bandage pneumatique et traversant la bande de roulement tout en contactant une partie de surface de la bande de roulement ayant une résistance spécifique non inférieure à $10^8$ $\Omega \cdot$cm et contactant également une partie d'au moins un élément de la bandage pneumatique autre que ladite bande de roulement, adjacent à ladite bande de roulement dans une direction radiale.

2. Bandage pneumatique selon la revendication 1, **caractérisé en ce que** la couche continue (2) est présente dans au moins un emplacement dans la direction de la largeur de la bande de roulement tout en contactant la partie de surface de la bande de roulement (1) et une partie de base de la bande de roulement qui y est adjacente.

3. Bandage pneumatique selon la revendication 2, **caractérisé en ce que** la couche continue (2) est présente dans une zone centrale de la bande de roulement (1).

4. Bandage pneumatique selon la revendication 2, **caractérisé en ce que** la couche continue (2) est présente dans chaque côté par rapport au centre de la bande de roulement (1).

5. Bandage pneumatique selon l'une quelconque des revendications 1 à 4, **caractérisé en ce qu'**une résistance électrique du bandage pneumatique entre une jante et le sol n'est pas supérieure à $10^7$ Ω.

## FIG_Ia

## FIG_Ib

## FIG_Ic

*FIG_2*

# FIG_3

## FIG_4

## FIG_5